Europäisches Patentamt

European Patent Office

Office européen des brevets

(19)

(11) EP 1 108 728 A1

## (12) EUROPEAN PATENT APPLICATION

(43) Date of publication:
20.06.2001 Bulletin 2001/25

(51) Int Cl.⁷: $C08F\ 4/651$, $C08F\ 10/00$

(21) Application number: 99430032.5

(22) Date of filing: 17.12.1999

(84) Designated Contracting States:
AT BE CH CY DE DK ES FI FR GB GR IE IT LI LU
MC NL PT SE
Designated Extension States:
AL LT LV MK RO SI

(71) Applicant: BP Chemicals S.N.C.
Cergy St. Christophe,
95866 Cergy Pontoise Cedex (FR)

(72) Inventor: The designation of the inventor has not
yet been filed

(74) Representative: De Kezel, Eric et al
BP Chemicals S.N.C.,
CRT/LPID,
B.P. no 6
13117 Lavéra (FR)

## (54) High activity polyethylene catalysts prepared with alkoxycarbon reagents

(57)    An ethylene copolymerisation catalyst is prepared by impregnating a porous support, such as silica, with an organomagnesium compound such as a dialkylmagnesium and contacting the magnesium-containing support with an alkoxycarbon compound which is free of hydroxyl groups, such as a tetraalkyl orthocarbonate, e.g. tetraethylorthocarbonate (TEOC). A transition metal component such as titanium tetrachloride is then incorporated into the support in a specific ratio to the magnesium and alkoxycarbon components. Activation of this catalyst precursor with a trialkylaluminum compound results in a catalyst which is effective for the production of ethylene copolymers.

EP 1 108 728 A1

**Description**

The present invention relates to a method for polymerising alpha-olefins, a catalyst for such a polymerisation and a method for producing such a catalyst. A particular aspect of the present invention relates to a method for producing linear low density copolymers of ethylene, hereinafter referred to as "LLDPE" and high density polymers, hereinafter referred to as "HDPE".

The present invention is particularly suitable for the co-polymerisation of olefins in the gas phase. Such gas phase polymerisation processes can be conducted for example by introducing the gaseous monomer and comonomer into a stirred and/or gas fluidised bed comprising polyolefin and a catalyst for the polymerisation. In the gas fluidised bed polymerisation of olefins, the polymerisation is conducted in a fluidised bed reactor wherein a bed of polymer particles is maintained in a fluidised state by means of an ascending gas stream comprising the gaseous reaction monomer. The start-up of such a polymerisation generally employs a bed of polymer particles similar to the polymer which it is desired to manufacture. During the course of polymerisation, fresh polymer is generated by the catalytic polymerisation of the monomer, and polymer product is withdrawn to maintain the bed at more or less constant volume. An industrially favoured process employs a fluidisation grid to distribute the fluidising gas to the bed, and to act as a support for the bed when the supply of gas is cut off. The polymer produced is generally withdrawn from the reactor via a discharge conduit arranged in the lower portion of the reactor, near the fluidisation grid. The fluidised bed consists in a bed of growing polymer particles. This bed is maintained in a fluidised condition by the continuous upward flow from the base of the reactor of a fluidising gas.

The polymerisation of olefins is an exothermic reaction and it is therefore necessary to provide means to cool the bed to remove the heat of polymerisation. In the absence of such cooling the bed would increase in temperature and, for example, the catalyst becomes inactive or the bed commences to fuse. In the fluidised bed polymerisation of olefins, the preferred method for removing the heat of polymerisation is by supplying to the polymerisation reactor a gas, the fluidising gas, which is at a temperature lower than the desired polymerisation temperature, passing the gas through the fluidised bed to conduct away the heat of polymerisation, removing the gas from the reactor and cooling it by passage through an external heat exchanger, and recycling it to the bed. The temperature of the recycle gas can be adjusted in the heat exchanger to maintain the fluidised bed at the desired polymerisation temperature. In this method of polymerising alpha olefins, the recycle gas generally comprises the monomer and comonomer olefins, optionally together with, for example, an inert diluent gas such as nitrogen or a gaseous chain transfer agent such as hydrogen. Thus, the recycle gas serves to supply the monomer to the bed, to fluidise the bed, and to maintain the bed at the desired temperature. Monomers consumed by the polymerisation reaction are normally replaced by adding make up gas or liquid to the polymerisation zone or reaction loop.

Linear low density polyethylene polymers possess properties which distinguish them from other polyethylene polymers such as high density polymers, including homopolymers of polyethylene. Certain of these properties are described in the Anderson et al U.S. Pat. No. 4,076,698.

When the polyethylene resins are fabricated into products, it is imperative to control the molecular weight distribution of the resins since, as is known to those skilled in the art, the properties of the products can be predicted from the molecular weight distribution of the resins.

One of the measures of the molecular weight distribution of the resin is melt flow ratio (MFR), which is the ratio of high load melt index (HLMI or $I_{21}$) to melt index (MI or $I_2$) for a given resin. MFR is defined herein as the ratio of the high load melt index (HLMI or $I_{21}$) divided by the melt index (MI or $I_2$). The melt flow ratio is believed to be an indication of the molecular weight distribution of the polymer, the higher the value, the broader the molecular weight distribution. Resins having relatively low MFR values, e.g., of about 20 to about 45, preferably 20 to 35, have relatively narrow molecular weight distributions. Additionally, LLDPE resins having such relatively low MFR values produce films of better strength properties than resins with high MFR values.

For higher density polyethylene the n value can be used as a measure of the molecular weight distribution of the polymer. This n value is calculated as $[\log_{10}(I_{8.5}/I_{0.325})]/[\log_{10}(8.5/0.325)]$ where $I_{8.5}$ and $I_{0.325}$ are the melt indexes measured under 8.5Kg and 0.325Kg respectively. The higher the n value, the broader the polymer molecular weight distribution.

The molecular weight of the ethylene (co)polymers may be controlled in a known manner, e.g., by using hydrogen. With the catalysts produced according to the present invention, molecular weight may be suitably controlled with hydrogen when the polymerisation is carried out at relatively low temperatures, e.g., from about 30°C to about 115°C. This control of molecular weight may be evidenced by a measurable positive change in melt index ($I_2$) of the polymer produced. For HDPE production it is essential that the catalyst used has a sufficiently high response to hydrogen since hydrogen will decrease the catalyst activity. It is therefore important that such catalysts produce polymers with the required molecular weight, using the minimum of hydrogen.

It is therefore a primary object of the present invention to provide a high activity catalyst for the polymerisation of alpha-olefins yielding LLDPE products of a relatively narrow molecular weight distribution. It is an additional object of the present invention to provide a catalytic process for polymerising alpha-olefins which yields polyethylene of a relatively narrow molecular weight distribution at high productivity.

It is also a primary object of the present invention to provide a high activity catalyst for the polymerisation of alpha-olefins yielding HDPE products of the required molecular weight distribution. It is an additional object of the present invention to provide a catalytic process for polymerising alpha-olefins which yields polyethylene of a required molecular weight distribution at high productivity.

A supported alpha-olefin polymerisation catalyst composition of the present invention is prepared in a multi-step process. In the first step, a mixture of a solid, porous carrier and a non-polar solvent is contacted with at least one organomagnesium compound of the formula

$$R_m MgR'_n$$

where R and R' are the same or different alkyl groups, preferably $C_2$-$C_{12}$ alkyl groups, preferably $C_4$-$C_{10}$ alkyl groups, more preferably $C_4$-$C_8$ alkyl groups, and most preferably both R and R' are butyl groups, and m and n are each 0, 1 or 2, providing that m+n is 2.

Subsequently, the mixture of the first step is optionally contacted with at least one chlorinating agent (X).

Subsequently, the mixture is contacted with alkoxycarbon compounds of general formulae,

$$O=C(OR)_2 \text{ or } R_X C(OR')_y$$

wherein R and R' are the same or different hydrocarbyl groups, and x is 0, 1, 2 or 3 and y is 1, 2, 3 or 4, providing that x+y is 4.

The mixture is then contacted with at least one transition metal compound soluble in the non-polar solvent. The resulting mixture is subsequently contacted with an organometallic compound.

The resulting activated catalyst composition has substantially higher productivity in the polymerisation of alpha-olefins, than similar catalyst compositions prepared without alkoxycarbon compound or using, for example siloxanes compounds in place of said alkoxycarbon compound. The catalyst also produces polymers having the required molecular weight distributions for polymers with a wide range of densities. The catalysts also show excellent hydrogen response for the production of HDPE polymers.

In accordance with an aspect of the present invention, supported titanium is incorporated onto a suitable support by impregnating this support with reactive magnesium and utilising this supported reactive magnesium to react with tetravalent titanium (i.e. titanium in the plus 4 valence state) in a liquid medium. Unreacted titanium is soluble in this liquid medium, while reacted titanium and supported reactive magnesium are insoluble in this liquid medium.

As used herein, the concept of supporting a material on a carrier is intended to connote the incorporation of material (e.g. magnesium compounds and/or titanium compounds) onto the carrier by physical or chemical means. Accordingly, supported material need not necessarily be chemically bound to the carrier.

Suitable carrier materials which may be treated include solid, porous carrier materials such as silica, alumina and combinations thereof. Such carrier materials may be amorphous or crystalline in form. These carriers may be in the form of particles having a particle size of from about 0.1 micron to about 250 microns, preferably from 10 to about 200 microns, and most preferably from about 10 to about 80 microns. Preferably, the carrier is in the form of spherical particles, e.g. spray dried silica.

The carrier material is also porous. The internal porosity of these carriers may be larger than 0.2 $cm^3$ /g. The specific surface area of these carriers is at least $3m^2$ /g, preferably at least about 50 $m^2$ /g, and more preferably from, e.g., about 150 to about 1500 $m^2$ /g.

It is desirable to remove physically bound water from the carrier material prior to contacting this material with water-reactive magnesium compounds. This water removal may be accomplished by heating the carrier material to a temperature from about 100°C to an upper limit of temperature represented by the temperature at which change of state or sintering occurs. A suitable range of temperatures may, thus, be from about 100°C to about 800°C, e.g., from about 150°C to about 700°C.

Silanol groups represented by the presence of Si-OH groups in the carrier, may be present when the carrier is contacted with water-reactive magnesium compounds in accordance with an aspect of the present invention. These Si-OH groups may be present at about 0.3 mmoles or more per gram of carrier. Accordingly, an amount of, e.g., from about 0.5 to about 5 mmoles of OH groups per gram of carrier may be present, but a preferred range is from about 0.3 to about 0.9 mmoles of OH groups per gram of carrier. Excess OH groups present in the carrier may be removed by heating the carrier for a sufficient time at a sufficient temperature to accomplish the desired removal. More particularly, for example, a relatively small number of OH groups may be removed by sufficient heating at from about 150°C to about 250°C., whereas a relatively large number of OH groups may be removed by sufficient heating at least 500°C to about 800°C, most especially, from about 550°C to about 700°C. The duration of heating may be from 4 to 16 hours. In a most preferred embodiment, the carrier is silica which, prior to the use thereof in the first catalyst synthesis step, has been dehydrated by fluidising it with nitrogen or air and heating at 700°C. for at least 4 hours to achieve a surface hydroxyl group concentration of about 0.6 millimoles per gram. The surface hydroxyl concentration of silica may be determined according to J. B. Peri and A. L. Hensley, Jr., J. Phys. Chem., 72 (8), 2926 (1968). The silica of the most preferred embodiment is a high surface area, amorphous silica (surface area=280 to 350m$^2$ /g; pore volume of 1.55 cm$^3$ /g), and it is a material marketed under the tradename of ES70 by Crosfield. When silica has been dehydrated by fluidising with nitrogen or air and heated at about 700°C for about 5 hours, then the surface hydroxyl concentration is about 0.55 mmols/g.

While heating is a preferred means of removing OH groups inherently present in a carrier such as silica, other removal means are also possible such as chemical means. For example, a desired proportion of OH groups may be reacted with a chemical agent such as a hydroxyl reactive aluminium compound, e.g. triethylaluminum.

Other examples of suitable carrier materials are described in the Graff, U.S. Pat. No. 4,173,547. Note particularly the passage extending from column 3, line 62 to column 5, line 44 of this Graff patent. It is noted that internal porosity of carriers can be determined by a technique termed BET-technique, described by S. Brunauer, P. Emmett and E. Teller in Journal of the American Chemical Society, 60, pp. 209-319 (1938). Specific surface areas of carriers can also be measured in accordance with the above-mentioned BET-technique, with use of the standardised method as described in British Standards BS 4359, Volume 1, (1969).

The carrier material is slurried in a non-polar solvent and the resulting slurry is contacted with at least one organomagnesium compound. The slurry of the carrier material in the solvent is prepared by introducing the carrier into the solvent, preferably while stirring, and heating the mixture to about 25°C to about 100°C, preferably to about 35°C to about 75°C. The slurry is then contacted with the aforementioned organomagnesium compound, while the heating is continued at the aforementioned temperature.

The organomagnesium compound has the empirical formula

$$R_m Mg R'_n$$

where R and R' are the same or different alkyl groups, preferably C$_2$-C$_{12}$ alkyl groups, preferably C$_4$-C$_{10}$ alkyl groups, more preferably C$_4$-C$_8$ alkyl groups, and most preferably both R and R' are butyl groups, and m and n are each 0, 1 or 2, providing that m+n is 2.

Suitable non-polar solvents are materials in which all of the reactants used herein, e.g., the organomagnesium compound, the optional chlorinating agent, the alkoxycarbon compound, and the transition metal compound, are at least partially soluble and which are liquid at reaction temperatures. Preferred non-polar solvents are alkanes, such as isopentane, hexane, n-heptane, octane, nonane, and decane, although a variety of other materials including cycloalkanes, such as cyclohexane, aromatics, such as benzene and ethylbenzene, may also be employed. The most preferred non-polar solvents are isopentane, hexane, and heptane. Prior to use, the non-polar solvent should be purified, such as by percolation through silica gel and/or molecular sieves, to remove traces of water, oxygen, polar compounds, and other materials capable of adversely affecting catalyst activity.

In the most preferred embodiment of the synthesis of this catalyst it is important to add only such an amount of the organomagnesium compound that will be deposited--physically or chemically--onto the support since any excess of the organomagnesium compound in the solution may react with other synthesis chemicals and precipitate outside of the support. The carrier drying temperature affects the number of sites on the carrier available for the organomagnesium compound--the higher the drying temperature the lower the number of sites. Thus, the exact molar ratio of the organomagnesium compound to the hydroxyl groups will vary and must be determined on a case-by-case basis to assure that only so much of the organomagnesium compound is added to the solution as will be deposited onto the support without leaving any excess of the organomagnesium compound in the solution. Furthermore, it is believed that the molar amount of the organomagnesium compound deposited onto the support is greater than the molar content of the hydroxyl groups on the support. Thus, the molar ratios given below are intended only as an approximate guideline and the exact amount of the organomagnesium compound in this embodiment must be controlled by the functional limitation discussed above, i.e., it must not be greater than that which can be deposited onto the support. If greater than that amount is added to the solvent, the excess may react with the reagents added subsequently, thereby forming a precipitate outside of the support which is detrimental in the synthesis of our catalyst and must be avoided. The amount of the organomagnesium compound which is not greater than that deposited onto the support can be determined in any conventional manner, e.g., by adding the organomagnesium compound to the slurry of the carrier in the solvent, while stirring the slurry, until the organomagnesium compound is detected in the solvent.

For example, for the silica carrier heated at about 700°C, the amount of the organomagnesium compound added to the slurry is such that the molar ratio of Mg to the hydroxyl groups (OH) on the solid carrier is about 1:1 to about 4:1, preferably about 1.1:1 to about 2.8:1, more preferably about 1.2:1 to about 2:1 and most preferably about 1.8:1. The organomagnesium compound dissolves in the non-polar solvent to form a solution from which the organomagnesium compound is deposited onto the carrier.

It is also possible to add such an amount of the organomagnesium compound which is in excess of that which will be deposited onto the support, and then remove, e.g., by filtration and washing, any excess of the organomagnesium compound.

The amount of magnesium compound which is impregnated onto the carrier should be sufficient to react with the alkoxycarbon compound and then the tetravalent titanium compound in order to incorporate a catalytically effective amount of titanium on the carrier in the manner set forth hereinbelow. When a liquid containing an organomagnesium compound is contacted with a carrier, the amount of magnesium in this liquid in terms of mmoles may be essentially the same as that stated above with respect to that which is impregnated onto the carrier.

An optional component in the production of the catalyst composition of the invention is a chlorinating agent (X). This component can be added to the slurry before, after or with the alkoxycarbon compound. The chlorinated compound (X) can be chosen from a range of known chlorinating agents, including those having the formula $R_nSiCl_{4-n}$ , wherein each R is the same or different and is hydrogen or an alkyl group, preferably a $C_1$-$C_{12}$ alkyl group, and n is an integer from 0 to 3, e.g. silicon tetrachloride. Alternative agents include HCl, BuCl, $CCl_4$ and trichloroethane. This contacting step is usually conducted at a temperature comprised between 25°C and 100°C, preferably between 40°C and 60°C. The chlorinated compound (X) is added to the slurry in an amount such to provide a molar ratio of ( X : Mg ) of 0.1 to 4.0 , preferably about 0.1 to about 3.0 , more preferably about 0.1 to 2.5.

The alkoxycarbon compounds used in the present invention have the general formulae,

$$0=C(OR)_2 \text{ or } R_XC(OR')_y$$

wherein R and R' are the same or different hydrocarbyl groups, and x is 0, 1, 2 or 3 and y is 1, 2, 3 or 4, providing that x+y is 4. Preferably, R is an alkyl group having 1 to 8 carbon atoms. Preferably R' is an alkyl, an aryl or an alkylaryl group having 1 to 10 carbon atoms, more preferably an alkyl group having 1 to 8 carbon atoms, most preferably an alkyl group with two carbon atoms. Preferably, y is 3 or 4, more preferably 4. A preferred alkoxycarbon compound is tetraethylorthocarbonate ( $C(O-C2H5)_4$ ).

The slurry of the carrier material and of the organomagnesium compound in the solvent is maintained at temperatures of about 40°C to about 60°C, before the introduction of the alkoxycarbon compound. The alkoxycarbon compound is preferably introduced after organomagnesium incorporation and before the transition metal incorporation into the catalyst. The amount of the alkoxycarbon compound added to the slurry is such that the molar ratio of the alkoxycarbon compound to Mg is about 0.20 to about 1.00.

The slurry is contacted with at least one transition metal compound soluble in the non-polar solvent, preferably after the addition of the alkoxycarbon compound is completed. This synthesis step is conducted at about 25°C to about 70°C, preferably at about 40°C to about 60°C, and most preferably at about 45°C to about 60°C. In a preferred embodiment, the amount of the transition metal compound added is not greater than that which can be deposited onto the carrier. The exact molar ratio of Mg to the transition metal and of the transition metal to the hydroxyl groups of the carrier will therefore vary (depending, e.g., on the carrier drying temperature) and must be determined on a case-by-case basis. For example, for the silica carrier heated at about 200°C to about 850°C, the amount of the transition metal compound is such that the molar ratio of the transition metal, derived from the transition metal compound, to the hydroxyl groups of the carrier is about 1 to about 2.0, preferably about 1.3 to about 2.0. The amount of the transition metal compound is also such that the molar ratio of Mg to the transition metal is about 0.5 to about 3, preferably about 1 to about 2.

Suitable transition metal compounds used herein are compounds of metals of Groups 4, 5, or 6 as adopted by the new IUPAC notation, providing that such compounds are soluble in the non-polar solvents. Non-limiting examples of such compounds are titanium halides, e.g., titanium tetrachloride, titanium alkoxides e.g., where the alkoxide moiety contains an alkyl radical of 1 to 6 carbon atoms or combinations, vanadium halides, and vanadium alkoxides. The preferred transition metal compounds are titanium compounds, preferably tetravalent titanium compounds. The most preferred titanium compound is titanium tetrachloride. Mixtures of such transition metal compounds may also be used and generally no restrictions are imposed on the transition metal compounds which may be included. Any transition metal compound that may be used alone may also be used in conjunction with other transition metal compounds.

The reaction of the transition metal compound, such as the tetravalent titanium compound, in the liquid medium conveniently takes place by slurrying the solid carrier containing the reactive magnesium species in a solution of the tetravalent titanium compound and heating the reaction medium to a suitable reaction temperature. Preferred solvents for the tetravalent titanium compound are hexane or isopentane or heptane.

The supported catalyst precursor formed from the components described above is then activated with suitable activators. Suitable activators include organometalic compounds. Preferably, the activators are organoaluminum compounds, preferably trialkylaluminum compounds which contain alkyl groups of 1 to 6 carbon atoms, preferably of 1 to 4. More preferably, the activators are triethylaluminum or trimethylaluminum.

The catalyst may be activated in situ by adding the activator and catalyst precursor separately to the polymerisation medium. It is also possible to combine the catalyst precursor and activator before introduction into the polymerisation medium, e.g., for up to about 2 hours at a temperature from about -40°C to about 80°C.

A suitable activating amount of the activator may be used. The number of moles of activator per gram atom of titanium in the catalyst may be, e.g., from about 1 to about 100 and is preferably greater than about 5.

In one embodiment of the present invention, olefin(s), preferably ethylene or propylene or combinations thereof are prepolymerised in the presence of the catalyst or catalyst system of the present invention prior to the main polymerisation. The prepolymerisation can be carried out batchwise or continuously in gas, solution or slurry phase including at elevated pressures. The prepolymerisation can take place with any alpha-olefin monomer or combination and/or in the presence of any molecular weight controlling agent such as hydrogen. For details on prepolymerisation see U.S. Pat. Nos. 4,923,833, 5,283,278 and 4,921,825 and EP-B-0279 863 all of which are herein fully incorporated by reference.

In another embodiment of the invention, the supported catalyst system of the invention includes an antistatic agent, for example, those described in U.S. Pat. No. 5,283,278, which is fully incorporated herein by reference. Non-limiting examples of antistatic agents include, alcohol, thiol, silanol, diol, ester, ketone, aldehyde, acid, amine, and ether compounds. Tertiary amines, ethoxylated amines, and polyether compounds are preferred. The antistatic agent can be added at any stage in the formation of the supported catalyst system of the invention.

In another embodiment of the invention, the supported catalyst system of the invention includes a polyolefin wax or tackifier or the like.

Alpha-olefins may be polymerised with the catalysts prepared according to aspects of the present invention by any suitable process. Such processes include polymerisation's carried out in suspension, in solution or in the gas phase. Gas phase polymerisation's are preferred such as those taking place in stirred bed reactors and, especially, fluidised bed reactors.

The process according to the present invention is thus particularly suitable for the manufacture of polymers in a continuous gas fluidised bed process. In an advantageous embodiment of this invention, the polymer is a polyolefin preferably copolymers of ethylene and/or propylene and/or butene. Preferred alpha-olefins used in combination with ethylene and/or propylene and/or butene in the process of the present invention are those having from 4 to 8 carbon atoms. However, small quantities of alpha olefins having more than 8 carbon atoms, for example 9 to 40 carbon atoms (e.g. a conjugated diene), can be employed if desired. Thus it is possible to produce copolymers of ethylene and/or propylene and/or butene with one or more C4-C8 alpha-olefins. The preferred alpha-olefins are but-1-ene, pent-1-ene, hex-1-ene, 4-methylpent-1-ene, oct-1-ene and butadiene.

Examples of higher olefins that can be copolymerised with the primary ethylene and/or propylene monomer, or as partial replacement for the C4-C8 monomer are dec-l-ene and ethylidene norbornene. According to a preferred embodiment, the process of the present invention preferably applies to the manufacture of polyolefins in the gas phase by the copolymerisation of ethylene with but-l-ene and/or hex-1-ene and/or 4-methylpent-1-ene.

The process according to the present invention may advantageously be used to prepare a wide variety of polymer products for example linear low density polyethylene (LLDPE) based on copolymers of ethylene with but-l-ene, 4methylpent-1-ene or hex-1-ene and high density polyethylene (HDPE) which can be for example copolymers of ethylene with a small portion of higher alpha olefin, for example, but-1-ene, pent-1-ene, hex-1-ene or 4-methylpent-1-ene.

When liquid condenses out of the recycle gaseous stream, it can be a condensable monomer, e.g. but-1-ene, hex-1-ene, 4-methylpent-1-ene or octene used as a comonomer, and/or an optional inert condensable liquid, e.g. inert hydrocarbon(s), such as C4-C8 alkane(s) or cycloalkane(s), particularly butane, pentane or hexane. Ethane or propane may also be used as inert hydrocarbons.

The process is particularly suitable for polymerising olefins at an absolute pressure of between 0.5 and 6 MPa and at a temperature of between 30°C and 130°C. For example for LLDPE production the temperature is suitably in the range 75-90°C and for HDPE the temperature is typically 80-105°C depending on the activity of the catalyst used and the polymer properties desired.

The polymerisation is preferably carried out continuously in a vertical fluidised bed reactor according to techniques known in themselves and in equipment such as that described in European patent application EP-0 855 411, French Patent No. 2,207,145 or French Patent No. 2,335,526. The process of the invention is particularly well suited to industrial-scale reactors of very large size.

In one embodiment the reactor used in the present invention is capable of producing greater than 300 Kg/hr to about 80,000 Kg/hr or higher of polymer, preferably greater than 10,000 Kg/hr.

It is essential to operate the fluid bed reactor at a temperature below the sintering temperature of the polymer particles. For the production of ethylene copolymers in the process of the present invention an operating temperature of about 30°C to 115°C is preferred. Temperatures of about 75°C to 90°C are used to prepare products having a density of about 0.91 to 0.92, and temperatures of about 80°C to 100°C are used to prepare products having a density of about 0.92 to 0.94, and temperatures of about 90°C to 115°C are used to prepare products having a density of about 0.94 to 0.96.

The fluid bed reactor is operated at pressures of up to about 1000 psi, and is preferably operated at a pressure of from about 150 to 350 psi, with operation at the higher pressures in such ranges favouring heat transfer since an increase in pressure increases the unit volume heat capacity of the gas.

The partially or completely activated catalyst is injected into the bed at a rate equal to its consumption. The production rate of the bed is controlled by the rate of catalyst injection. The production rate may be increased by simply increasing the rate of catalyst injection and decreased by reducing the rate of catalyst injection.

Since any change in the rate of catalyst injection will change the rate of generation of the heat of reaction, the temperature of the recycle gas is adjusted upwards or downwards to accommodate the change in rate of heat generation. This insures the maintenance of an essentially constant temperature in the bed.

The molecular weight of the polymer may be controlled in a known manner, preferably by using hydrogen. With the catalysts produced according to aspects of the present invention, molecular weight may be suitably controlled with hydrogen when the polymerisation is carried out at relatively low temperatures, e.g., from about 30°C to about 115°C. This control of molecular weight may be evidenced by a measurable positive change in melt index ($I_2$) for the polymer produced.

The catalysts prepared according to aspects of the present invention are highly active and are useful for the production of both linear low density and high density polyethylene polymers. Such linear low density polyethylene polymers may have a density of 0.94 g/cc or less, preferably 0,930 or less or even 0.925 g/cc or less. In accordance with certain aspects of the present invention, it is possible to achieve densities of less than 0.915 g/cc and even 0.900 g/cc or less.

Advantageous properties of linear low density polyethylene polymers are described in the Anderson et al U. S. Pat. No. 4,076,698. These linear low density polyethylene polymers may be polymers of ethylene with one or more $C_3$-$C_{10}$ alpha-olefins. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1butene terpolymers. When propylene is employed as a comonomer, the resulting linear low density polyethylene polymer preferably has at least one other alphaolefin comonomer having at least four carbon atoms in an amount of, e.g. at least 1 percent by weight of the polymer. Accordingly, ethylene/propylene copolymers are possible, but not preferred.

The molecular weight distribution of the polymers prepared in the presence of the catalysts of the present invention, as expressed by the MFR values, varies from about 20 to 35 for LLDPE products having a density of about 0.900 to about 0.940 g/cc, and an $I_2$ (melt index) of about 0.1 to about 100. As is known to those skilled in the art, such MFR values are indicative of a relatively narrow molecular weight distribution of the polymer. As is also known to those skilled in the art, such MFR values are indicative of polymers especially suitable for injection moulding applications since polymers having such MFR values exhibit relatively low amounts of warpage and shrinkage on cooling of the injection moulded products. The relatively low MFR values of polymers prepared with the catalysts of this invention also indicate that they are suitable for the preparation of various film products since such films are likely to have excellent strength properties.

The linear low density polyethylene polymers produced in accordance with certain aspects of the present invention preferably contain at least about 80 percent by weight of ethylene units. Most preferably, the linear low density copolymers of the invention contain at least 2 weight percent, for example from 2 to 20 weight percent of an alpha olefin copolymerised therein.

The following Examples give examples of reactants and parameters which may be used in accordance with aspects of the present invention.

EXAMPLES

All manipulations were carried out using air free techniques.

CATALYST PRECURSOR PREPARATION

Example 1.

Into a 1 litre vessel, equipped with stirrer, was placed about 20g silica (previously calcined to 700°C for 5hr

under $N_2$) and 200ml hexane. The slurry was stirred at 250rpm and 50°C. Dibutylmagnesium (1 mmol/g silica) was added to this slurry at 50°C and the mixture was stirred at this temperature for 1 hr. Next tetraethoxycarbonate (0.33 mmol/g silica) was added and the mixture stirred for 2 hrs at 50°C. Subsequently $TiCl_4$ (1 mmol/g) was added and the mixture was stirred for 1 hour at 50°C. The solvent was removed by evaporation under a strong nitrogen flow, followed by vacuum to yield a free-flowing powder.

Example 2.

The same as example 1, except tetraethoxycarbonate (0.44mmol/g silica) was employed

Example 3.

The same as example 1, except tetraethoxycarbonate (0.66 mmol/g silica) was employed

Example 4.

The same as example 1, except tetraethoxycarbonate (1mmol/g silica) was employed

POLYMERIZATION

LLDPE Test

Ethylene/1-hexene copolymers were prepared with these catalyst precursors and the cocatalyst triethylaluminum (TEAL). The procedure is described below.

A 5 liter stainless-steel autoclave equipped with a magnet stirrer was filled with hexane (1200 ml) and 3.0 mmol of cocatalyst at ambient temperature. The reactor was briefly vented to lower the pressure, closed and the stirring increased to 700 rpm. Hexene was then introduced, sufficient to give LLDPE product (<0.920 density), and the temperature was increased to 85°C. The internal pressure was raised with hydrogen (sufficient to give melt index between 1 and 4 and then ethylene (2.8bar) was introduced. Catalyst precursor was then injected using ethylene, such that the total pC2 was 4 to 5bar. The polymerisation reaction was carried out for 1 hour and then the ethylene supply was stopped. The reactor was allowed to cool to ambient temperature and the polyethylene was collected and dried in the air overnight. Given in Table 1 are the catalyst productivities, polymer flow indexes and MFR values, and densities of the polymer.

Table 1:

| LLDPE Tests | | | | | | pellet | | |
|---|---|---|---|---|---|---|---|---|
| Example | Temperature °C | pC2 bar | H2/C2 | mlC6/ b C2 | Ave Prod g/g/b/h | MI | MFR | d |
| example 1 | 85 | 4 | 0.13 | 480/4 | 400 | 0.9 | 30 | 0.921 |
| example 2 | 85 | 4 | 0.15 | 475/4 | 525 | 1.0 | 32 | 0.916 |
| example 3 | 85 | 4 | 0.15 | 450/4 | 475 | 0.9 | 33 | 0.915 |
| example 4 | 85 | 4 | 0.15 | 425/4 | 300 | 0.77 | 35 | 0.920 |

The data shows (table 1) that using an alkoxycarbon compound at certain concentrations produced catalysts with good activity whilst maintaining narrow MFR's.

HDPE Test

Ethylene/butene copolymers were prepared with these catalyst precursors (ex.2 to 4) and the cocatalyst triethylaluminum (TEAL). The procedure is described below.

A 5 liter stainless-steel autoclave equipped with a magnet stirrer was filled with hexane (1200 ml) and 3.0 mmol of cocatalyst at ambient temperature. The reactor was briefly vented to lower the reactor pressure, closed and the stirring increased to 700rpm. The temperature was increased to 90°C. The internal pressure was raised with hydrogen (sufficient to give melt index around 30) and then butene was introduced (10ml) then ethylene (2.8bar) was introduced. Catalyst precursor was then injected using ethylene, such that the total pC2 was 5.5 bar. The polymerisation reaction was carried out for 1 hour and then the ethylene supply was stopped. The reactor was allowed to cool to ambient temperature and the polyethylene was collected and dried in the air overnight. Given in Table 2 are the catalyst productivities, polymer flow indices and densities of the polymer.

The data shows that using TEOC as part of the formulation produced catalysts with improved activities and hydrogen response.

Table 2:

| HDPE Tests | | | | | | | |
|---|---|---|---|---|---|---|---|
| Example | Temperature °C | pC2 bar | vol C4 mls | H2/C2 | Ave Prod g/g/b/h | powder | |
| | | | | | | MI | d |
| example 2 | 90 | 5.5 | 10 | 1 | 400 | 56 | 0.95 8 |
| example3 | 90 | 5.5 | 10 | 0.9 | 350 | 36 | 0.95 6 |
| example 4 | 90 | 5.5 | 10 | 0.8 | 225 | 27 | 0.95 7 |

Thus it is apparent that there has been provided, in accordance with the invention, a composition which is effective to form copolymers of ethylene, that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

## Claims

1. A catalyst composition for copolymerising ethylene and an alpha olefin of 3 to 10 carbon atoms, comprising a catalyst precursor and an organometallic compound to activate said catalyst precursor, wherein the catalyst is prepared by a process which comprises the steps of:

   (i) contacting a solid, porous carrier having reactive OH groups in a non-polar liquid with an organomagnesium compound which has the empirical formula

   $$R_m MgR'_n$$

   where R and R' are the same or different alkyl groups, and m and n are each 0, 1 or 2, providing that m+n=2, to form a product of step (i) which contains said carrier and incorporated therein a source of magnesium, wherein said organomagnesium compound is soluble in said non-polar liquid,

   (ii) optionally contacting the product (i) with a chlorinating agent (X),

   (iii) adding alkoxycarbon compounds of general formula,

   $$O=C(OR)_2 \text{ or } R_X C(OR')_y$$

   wherein R and R' are the same or different hydrocarbyl groups, and x is 0, 1, 2 or 3 and y is 1, 2, 3 or 4, providing that x+y is 4,

   (iv) contacting the product from step (iii) with at least one transition metal compound in a non-polar liquid medium, said transition metal compound being soluble in said non-polar liquid, and said organomagnesium compound contacted carrier being substantially insoluble in said liquid medium, whereby a reacted form of the transition metal becomes supported on said carrier to form a step (iv) precursor; and

   (v) contacting the step (iv) precursor with an activating amount of an organometallic compound.

2. The catalyst composition of claim 1, wherein the carrier is silica.

3. The catalyst of any of the preceding claims, wherein the organometallic compound is an organoaluminum compound, preferably a trialkylaluminum.

4. The catalyst composition of claim 3, wherein the trialkylaluminum is triethylaluminum.

5. The catalyst of any of the preceding claims, wherein the molar ratio of the organometallic to transition metal ranges from 1 to 100.

6. The catalyst of any of the preceding claims, wherein the transition metal is titanium.

7. The catalyst of claim 6, wherein the transition metal is provided as tetravalent titanium compound, preferably titanium tetrachloride.

8. The catalyst of any of the preceding claims, wherein the precursor is prepared at a temperature in the range of $40°C$ to $65°C$.

9. The catalyst of any of the preceding claims, wherein the R and R' radical of the organomagnesium compound are $C_4$ to $C_{10}$ alkyl groups, preferably $C_4$ to $C_8$, more preferably butyl groups.

10. The catalyst of any of the preceding claims, wherein the ratio of the number of moles of the organomagnesium compound to the number of moles the OH groups of the carrier is from about 1 to about 4.

11. The catalyst of any of the preceding claims, wherein the chlorinated compound (X) is used as to provide a molar ratio X:Mg of 0.1 to 4 , preferably 0.1 to 3.

12. The catalyst of any of the preceding claims, wherein, in the formula of the alkoxycarbon compound, R is an alkyl group having 1 to 8 carbon atoms and R' is an alkyl, an aryl or an alkylaryl group having 1 to 10 carbon atoms, preferably an alkyl group having 1 to 8 carbon atoms, more preferably an alkyl group with two carbon atoms.

13. The catalyst of claim 12 wherein y is 3 or 4, more preferably 4.

14. The catalyst of claim 13 wherein the alkoxycarbon compound is tetraethylorthocarbonate ( $C(O-C2H5)_4$ )

15. The catalyst of any of the preceding claims, wherein the alkoxycarbon compound is added as to provide a molar ratio of alkoxycarbon:Mg of 0.2 to 1.

16. The catalyst of any of the preceding claims, wherein the transition metal compound is added as to provide a molar ratio of Ti:Mg of 0.5 to 3, preferably 1 to 2.

**European Patent Office**

**EUROPEAN SEARCH REPORT**

Application Number

EP 99 43 0032

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 208 524 A (TOA NENRYO KOGYO KK)<br>14 January 1987 (1987-01-14)<br>* example 22, application example 22 *<br><br>* page 2, line 27 – page 3, line 1 *<br>* page 3, line 23 *<br>* page 9, line 23 – line 24 *<br>* page 9, line 34 – line 35 *<br>* page 10, line 16 – line 18 *<br>* page 11, line 7 – line 8 *<br>* page 16, line 1 – line 3 *<br>--- | 1-9,<br>11-16<br>10 | C08F4/651<br>C08F10/00 |
| Y | WO 95 34380 A (MOBIL OIL CORP)<br>21 December 1995 (1995-12-21)<br>* page 6, line 26 – line 29 *<br>--- | 10 | |
| X | EP 0 250 212 A (TOA NENRYO KOGYO KK)<br>23 December 1987 (1987-12-23)<br>* examples 11,14 *<br>* page 3, line 5 – line 12 *<br>* page 5, line 13 – line 14 *<br>* page 5, line 26 – line 27 *<br>* page 6, line 24 – line 25 *<br>--- | 1-9,<br>12-16 | |
| X | EP 0 173 470 A (TOA NENRYO KOGYO KK)<br>5 March 1986 (1986-03-05)<br>* example 3, aplied example 3 *<br>* page 2A, line 2 – line 4 *<br>* page 10, line 6 – line 10 *<br>* page 6, line 27 – line 28 *<br>* page 11, line 33 *<br>* page 13, line 34 – line 37 *<br>----- | 1-9,<br>12-16 | TECHNICAL FIELDS SEARCHED (Int.Cl.7)<br><br>C08F |

The present search report has been drawn up for all claims

| Place of search | Date of completion of the search | Examiner |
|---|---|---|
| THE HAGUE | 9 May 2000 | Gamb, V |

**ANNEX TO THE EUROPEAN SEARCH REPORT
ON EUROPEAN PATENT APPLICATION NO.**

EP 99 43 0032

This annex lists the patent family members relating to the patent documents cited in the above—mentioned European search report.
The members are as contained in the European Patent Office EDP file on
The European Patent Office is in no way liable for these particulars which are merely given for the purpose of information.

09-05-2000

| Patent document cited in search report | | Publication date | Patent family member(s) | | Publication date |
|---|---|---|---|---|---|
| EP 0208524 | A | 14-01-1987 | JP | 1984583 C | 25-10-1995 |
| | | | JP | 7021018 B | 08-03-1995 |
| | | | JP | 62007706 A | 14-01-1987 |
| | | | AU | 5975186 A | 08-01-1987 |
| | | | CA | 1288758 A | 10-09-1991 |
| | | | US | 4693990 A | 15-09-1987 |
| WO 9534380 | A | 21-12-1995 | US | 5514634 A | 07-05-1996 |
| | | | AU | 691003 B | 07-05-1998 |
| | | | AU | 2697495 A | 05-01-1996 |
| | | | CA | 2182093 A | 21-12-1995 |
| | | | CN | 1150394 A | 21-05-1997 |
| | | | EP | 0766599 A | 09-04-1997 |
| | | | JP | 10502101 T | 24-02-1998 |
| | | | ZA | 9504656 A | 06-12-1996 |
| EP 0250212 | A | 23-12-1987 | JP | 62295909 A | 23-12-1987 |
| | | | BR | 8703034 A | 08-03-1988 |
| EP 0173470 | A | 05-03-1986 | JP | 1927371 C | 25-04-1995 |
| | | | JP | 6055783 B | 27-07-1994 |
| | | | JP | 61037803 A | 22-02-1986 |
| | | | AU | 586637 B | 20-07-1989 |
| | | | AU | 4562385 A | 06-02-1986 |
| | | | CA | 1249569 A | 31-01-1989 |
| | | | DE | 3582208 D | 25-04-1991 |
| | | | US | 4647550 A | 03-03-1987 |